# EUROPEAN PATENT APPLICATION

(11) **EP 4 633 102 A1**
(43) Date of publication of application: **15.10.2025**
(21) Application number: 23910340.1
(22) Date of filing: 21.12.2023
(51) Int. Cl.: H04L 41/082, G06F 8/65

(54) **PROCESSING METHOD AND APPARATUS, AND VEHICLE**

(30) Priority: 30.12.2022 CN 202211730493
(71) Applicant: Shenzhen Yinwang Intelligent Technologies Co., Ltd., Shenzhen, Guangdong 518110 (CN)
(72) Inventor: YANG, Haiquan, Shenzhen, Guangdong 518129 (CN); LIANG, Peng, Shenzhen, Guangdong 518129 (CN); LIU, Zhibin, Shenzhen, Guangdong 518129 (CN); LIU, Lei, Shenzhen, Guangdong 518129 (CN)
(74) Representative: Maiwald GmbH
(86) International application number: PCT/CN2023/140672
(87) International publication number: WO 2024/140414

(57) **Abstract**

Embodiments of this application provide a processing method and apparatus, and a carrier. The method includes: determining a first procedure phase in which a failure occurs in an over-the-air OTA technology update process; determining a first failure type from a plurality of OTA failure types based on the first procedure phase; and determining at least one processing strategy based on the first failure type. According to the foregoing method, in the OTA update process, a cause of an OTA update failure can be accurately evaluated, and impact of the OTA update failure can be evaluated, to provide a corresponding processing strategy and suggestion.

## Description

This application claims priority to Chinese Patent Application No. 202211730493.5, filed with the China National Intellectual Property Administration on December 30, 2022 and entitled "PROCESSING METHOD AND APPARATUS, AND CARRIER", which is incorporated herein by reference in its entirety.

### TECHNICAL FIELD

Embodiments of this application relate to the field of intelligent vehicles, and more specifically, to a processing method and apparatus, and a carrier.

### BACKGROUND

As intelligent vehicles are widely used in daily life, users expect that the intelligent vehicles and related devices can bring more comfortable intelligent experience. In view of this, an over-the-air (over-the-air, OTA) technology gradually becomes an essential basic function of the intelligent vehicles. For entire vehicle OTA, a software package is pushed from a cloud to a vehicle, functions such as software installation and/or update are completed on the vehicle, and a new function may be added to the vehicle through the over-the-air technology, or an existing function of the vehicle may be optimized. This greatly enriches intelligent experience of the user.

However, an entire vehicle OTA update procedure is complex, and includes a plurality of procedure phases. An exception in a procedure phase may cause a vehicle update failure, and further affect intelligent experience of the user. In addition, because each intelligent vehicle may include dozens or even hundreds of electronic control units (electronic control units, ECUs), different ECU update failures have different impact on the vehicle. Therefore, how to accurately identify a cause of an OTA update failure and evaluate impact of the OTA update failure is a problem that needs to be urgently resolved.

### SUMMARY

Embodiments of this application provide a processing method and apparatus, and a carrier, to accurately identify a cause of an OTA update failure and evaluate impact of the OTA update failure in an OTA update process, so as to provide a corresponding processing strategy and suggestion.

According to a first aspect, a processing method is provided. The method includes: determining a first procedure phase in which a failure occurs in an over-the-air OTA technology update process; determining a first failure type from a plurality of OTA failure types based on the first procedure phase; and determining at least one processing strategy based on the first failure type.

Optionally, the first failure type may include a first failure level. In other words, the carrier may determine the first failure level from a plurality of OTA failure levels, to determine the at least one processing strategy.

Optionally, the at least one processing strategy may include: prompting a user to reinstall an update package, re-pushing an update task, prompting the user with the carrier's inability to drive, and the like.

In this embodiment of this application, the carrier may determine the first failure type from the plurality of OTA failure types based on a procedure phase of an OTA update failure, and determine the at least one processing strategy based on the first failure type. In this manner, in the OTA update process, a cause of the OTA update failure can be accurately evaluated, and impact of the OTA update failure can be evaluated, to provide a corresponding processing strategy and suggestion.

With reference to the first aspect, in some implementations of the first aspect, the method further includes: prompting a user with the failure that occurs in the OTA update process and the at least one processing strategy.

Optionally, a message may be pushed on a display of the carrier to prompt the user with the OTA update failure and the at least one processing strategy.

Optionally, the user may be audibly prompted with the OTA update failure and the at least one processing strategy.

In this embodiment of this application, after determining the first failure type and the at least one processing strategy, the carrier may prompt the user in time with the OTA update failure and the corresponding processing strategy. In this way, a right of the user to know in the entire OTA update process can be ensured, and anxiety of the user caused by the OTA update failure can be alleviated.

With reference to the first aspect, in some implementations of the first aspect, the method further includes: sending first indication information to a server, where the first indication information indicates the first failure type.

Optionally, the server may include: a server responsible for OTA update and/or a server of an operator. The server may be deployed on an electronic device that has a communication function and a storage function, or may be deployed on a virtual machine on a cloud.

In this embodiment of this application, the carrier may send the first indication information to the server to indicate the first failure type of the OTA update failure, so that the server formulates a corresponding processing strategy and suggestion based on the first failure type.

With reference to the first aspect, in some implementations of the first aspect, the first procedure phase includes one or more of an update condition check phase, an OTA mode entering phase, a flushing phase, a software activation phase, an OTA mode exiting phase, and an update completion processing phase.

With reference to the first aspect, in some implementations of the first aspect, the first procedure phase includes the flushing phase, and the determining a first failure type from a plurality of OTA failure types based on the first procedure phase includes: determining the first failure type from the plurality of OTA failure types based on the first procedure phase and a type of a faulty component.

Optionally, the type of the faulty component may include a driving-related component and a non-driving-related component.

Optionally, the type of the faulty component may include a specific type of the component, for example, a vehicle control unit (vehicle control unit, VCU) or a motor control unit (motor control unit, MCU).

In this embodiment of this application, if the OTA update failure occurs in the flushing phase, the carrier may determine the first failure type from the plurality of OTA failure types based on the procedure phase and the type of the faulty component. In this way, because the type of the faulty component is additionally considered, the determined first failure type is more accurate.

With reference to the first aspect, in some implementations of the first aspect, the method further includes: obtaining error code, where the error code is determined based on a second procedure phase corresponding to an electronic control unit ECU flushing failure and a cause of the ECU flushing failure; and the determining a first failure type from a plurality of OTA failure types based on the first procedure phase includes: determining the first failure type from the plurality of OTA failure types based on the first procedure phase, the type of the faulty component, and the error code.

Optionally, the second procedure phase corresponding to the ECU flushing failure may include: a pre-programming phase, a main programming phase, a post-programming phase, and the like.

Optionally, based on the foregoing error code, the carrier may determine an error type corresponding to the error code, and formulate a corresponding processing strategy based on the error type.

In this embodiment of this application, if the OTA update failure occurs in the flushing phase, the carrier may determine the first failure type from the plurality of OTA failure types based on the procedure phase, the type of the faulty component, and the error code. In this way, the first failure type can be determined more accurately, and the processing strategy can be formulated more accurately.

According to a second aspect, a processing method is provided. The method includes: receiving first indication information sent by a carrier, where the first indication information indicates a first failure type, and the first failure type corresponds to a first procedure phase in which a failure occurs in an OTA update process of the carrier; and prompting, based on the first failure type, a user with the failure that occurs in the OTA update process and at least one processing suggestion.

Optionally, the first failure type may further correspond to error code and a type of a faulty component.

Optionally, after receiving the first indication information, the server may push a message to an application on a mobile phone of the user or send a short message to the mobile phone of the user, to prompt the user with the failure that occurs in the OTA update process and the at least one processing suggestion.

Optionally, the at least one processing suggestion may include: prompting the user with the carrier's inability to drive, performing a telephone follow-up on the user, providing a trailer service, and the like.

In this embodiment of this application, after receiving the first indication information sent by the carrier, the server may prompt, based on the first failure type, the user with the failure that occurs in the OTA update process and the at least one processing suggestion. In this manner, after the OTA update failure occurs, a right of the user to know can be ensured in time, and anxiety of the user caused by the OTA update failure can be alleviated.

With reference to the second aspect, in some implementations of the second aspect, the first procedure phase includes one or more of an update condition check phase, an OTA mode entering phase, a flushing phase, a software activation phase, an OTA mode exiting phase, and an update completion processing phase.

According to a third aspect, a processing apparatus is provided, where the apparatus includes a processing unit. The processing unit is configured to:
determine a first procedure phase in which a failure occurs in an over-the-air OTA technology update process; determine a first failure type from a plurality of OTA failure types based on the first procedure phase; and determine at least one processing strategy based on the first failure type.

With reference to the third aspect, in some implementations of the third aspect, the processing unit is further configured to prompt a user with the failure that occurs in the OTA update process and the at least one processing strategy.

With reference to the third aspect, in some implementations of the third aspect, the apparatus further includes a transceiver unit, where the transceiver unit is configured to send first indication information to a server, where the first indication information indicates the first failure type.

With reference to the third aspect, in some implementations of the third aspect, the first procedure phase includes one or more of an update condition check phase, an OTA mode entering phase, a flushing phase, a software activation phase, an OTA mode exiting phase, and an update completion processing phase.

With reference to the third aspect, in some implementations of the third aspect, the first procedure phase includes the flushing phase; and the processing unit is specifically configured to determine the first failure type from the plurality of OTA failure types based on the first procedure phase and a type of a faulty component.

With reference to the third aspect, in some implementations of the third aspect, the processing unit is further configured to obtain error code, where the error code is determined based on a second procedure phase corresponding to an electronic control unit ECU flushing failure and a cause of the ECU flushing failure; and the processing unit is specifically configured to determine the first failure type from the plurality of OTA failure types based on the first procedure phase, the type of the faulty component, and the error code.

According to a fourth aspect, a processing apparatus is provided, where the apparatus includes a transceiver unit and a processing unit. The transceiver unit is configured to receive first indication information sent by a carrier, where the first indication information indicates a first failure type, and the first failure type corresponds to a first procedure phase in which a failure occurs in an OTA update process of the carrier; and the processing unit is configured to prompt, based on the first failure type, a user with the failure that occurs in the OTA update process and at least one processing suggestion.

With reference to the fourth aspect, in some implementations of the fourth aspect, the first procedure phase includes one or more of an update condition check phase, an OTA mode entering phase, a flushing phase, a software activation phase, an OTA mode exiting phase, and an update completion processing phase.

According to a fifth aspect, a processing apparatus is provided. The apparatus includes at least one processor and a memory, and the at least one processor is coupled to the memory, and is configured to read and execute instructions in the memory, so that the apparatus performs the method according to any one of the first aspect and the implementations of the first aspect or the second aspect and the implementations of the second aspect.

According to a sixth aspect, a computer-readable storage medium is provided, where the computer-readable storage medium stores program code, and when the computer program code is run on a computer, the computer is enabled to perform the method according to any one of the first aspect and the implementations of the first aspect
or the second aspect and the implementations of the second aspect.

According to a seventh aspect, a chip is provided, where the chip includes a circuit, and the circuit is configured to perform the method according to any one of the first aspect and the implementations of the first aspect or the second aspect and the implementations of the second aspect.

According to an eighth aspect, a carrier is provided, including the processing apparatus according to any one of the implementations of the third aspect.

According to a ninth aspect, a server is provided, including the processing apparatus according to any one of the implementations of the fourth aspect.

According to a tenth aspect, a processing system is provided, including the carrier in the ninth aspect and the server in the tenth aspect.

### BRIEF DESCRIPTION OF DRAWINGS

FIG. 1 is a functional diagram of a carrier according to an embodiment of this application;
FIG. 2 shows a system architecture to which a processing method according to an embodiment of this application is applicable;
FIG. 3 is a schematic flowchart of a processing method according to an embodiment of this application;
FIG. 4A to FIG. 4C are a schematic flowchart of another processing method according to an embodiment of this application;
FIG. 5A to FIG. 5E are a schematic flowchart of another processing method according to an embodiment of this application;
FIG. 6(a) to FIG. 6(e) are diagrams of a scenario to which a processing method according to an embodiment of this application is applicable;
FIG. 7 shows a processing apparatus according to an embodiment of this application; and
FIG. 8 shows another processing apparatus according to an embodiment of this application.

### DESCRIPTION OF EMBODIMENTS

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

The following describes technical solutions of embodiments in this application with reference to accompanying drawings.

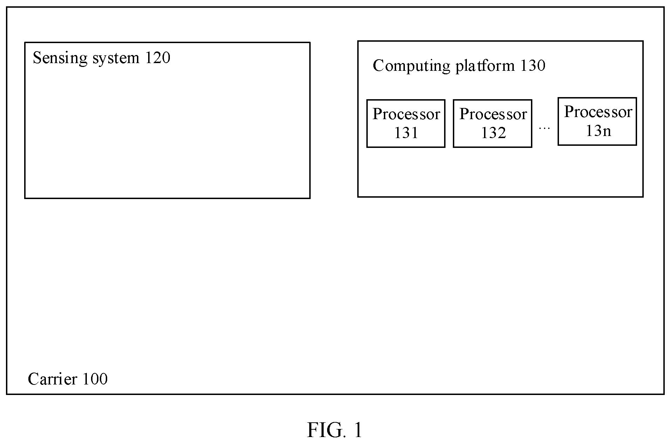

FIG. 1 is a functional diagram of a carrier 100 according to an embodiment of this application. It should be understood that FIG. 1 and related descriptions are merely examples, and do not limit the carrier in embodiments of this application.

The carrier 100 may include a plurality of subsystems, such as a sensing system 120 and a computing platform 130. Optionally, the carrier 100 may include more or fewer subsystems, and each subsystem may include one or more components. In addition, all subsystems and components of the carrier 100 may be interconnected in a wired or wireless manner.

The sensing system 120 may include several types of sensors for sensing information about an ambient environment of the carrier 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

Some or all of functions of the carrier 100 may be controlled by the computing platform 130. The computing platform 130 may include processors 131 to 13n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement a corresponding function.

The computing platform 130 may control the functions of the carrier 100 based on inputs received from various subsystems (for example, the sensing system 120). For example, the computing platform 130 can control, based on an input received from the sensing system 120, a vehicle door of the carrier to be open or closed. In some embodiments, the computing platform 130 may be configured to control many aspects of the carrier 100 and the subsystems of the carrier.

Optionally, the foregoing components are merely examples. In actual application, components in the foregoing modules may be added or deleted based on an actual requirement. FIG. 1 should not be understood as any limitation on this embodiment of this application.

The carrier 100 in this application may include a road transportation tool, a water transportation tool, an air transportation tool, an industrial device, an agricultural device, an entertainment device, or the like. For example, the carrier 100 may be a vehicle. The vehicle is a vehicle in a broad sense, and may be a transportation tool (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the carrier 100 may be a transportation tool such as an aircraft or a ship.

The following uses an example in which the carrier 100 is a vehicle, to describe a technical problem that needs to be resolved in this application and technical solutions used in this application.

As intelligent vehicles are widely used in daily life, users expect that the intelligent vehicles and related devices can bring more comfortable intelligent experience. In view of this, OTA gradually becomes an essential basic function of the intelligent vehicles. For entire vehicle OTA, a software package is pushed from a cloud to a vehicle, functions such as software installation and/or update are completed on the vehicle, and a new function may be added to the vehicle through OTA, or an existing function of the vehicle may be optimized. This greatly enriches intelligent experience of the user.

However, an entire vehicle OTA update procedure is complex, and includes a plurality of procedure phases. An exception in a procedure phase may cause a vehicle update failure, and further affect intelligent experience of the user. In addition, because each intelligent vehicle may include dozens or even hundreds of ECUs, different ECU update failures have different impact on the vehicle. For example, a seat controller ECU update failure does not affect traveling of a vehicle, but a battery management system (battery management system, BMS) update failure affects traveling of the vehicle. Therefore, how to accurately identify a cause of an OTA update failure and evaluate impact of the OTA update failure is a problem that needs to be urgently resolved.

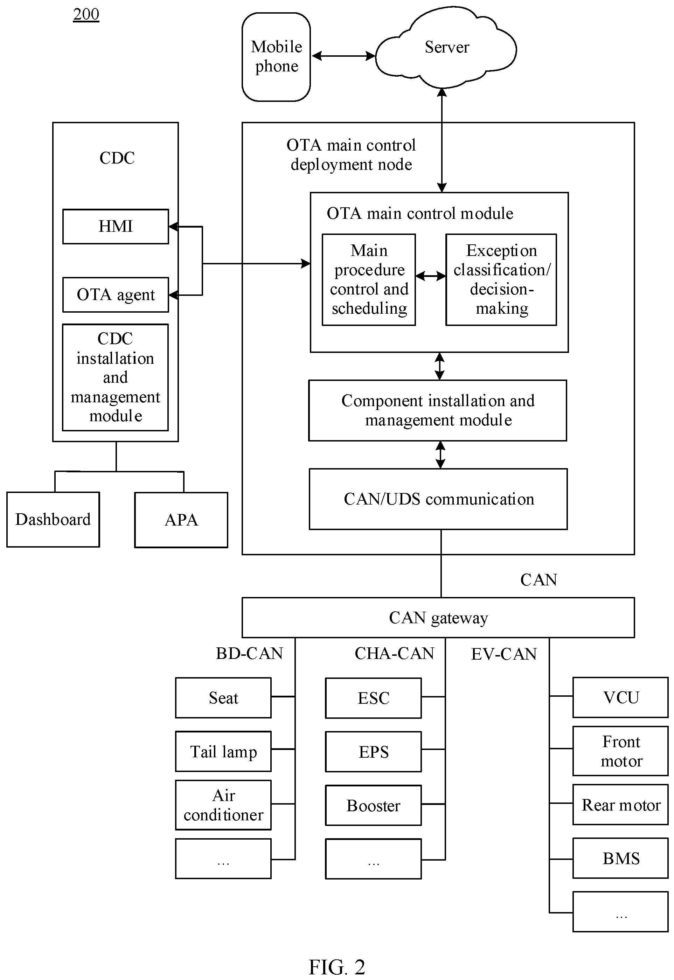

FIG. 2 shows a system architecture to which a processing method according to an embodiment of this application is applicable.

As shown in FIG. 2, an architecture 200 may include a server, a mobile phone, an OTA main control deployment node, a cockpit domain controller (cockpit domain controller, CDC), and a controller area network (controller area network, CAN) gateway. The server may include an OTA server or a content delivery network (content delivery network, CDN) server. The server may communicate with an OTA main control module of a vehicle through a mobile communication network (for example, 2G/3G/4G/5G), and send an installation package to the OTA main control module to complete OTA update. The mobile phone and the server may also communicate with each other through a mobile communication network. The server may obtain OTA update progress and update result information from the OTA main control module, and push the information to the mobile phone through the mobile communication network. A user may view an OTA update progress and result of the vehicle via the mobile phone at any time. The OTA main control deployment node may include the OTA main control module, a component installation and management module, and a CAN/unified diagnostic service (unified diagnostic service, UDS) module. The OTA main control module may schedule a main procedure of OTA update, classify and/or make a decision on an update exception, and exchange information with the CDC, so that related components (for example, an infotainment (human machine interaction, HMI) system, an automated parking assist (automated parking assist, APA) system, and a dashboard) in the CDC are updated. The component installation and management module may be configured to coordinate update of a plurality of components on the vehicle and analyze impact of a component update exception. The CAN/unified diagnostic service (unified diagnostic service, UDS) communication module can be used to communicate with the CAN gateway and analyze impact of an UDS flushing procedure exception. The CAN gateway may be a core component in a vehicle electronic and electrical architecture, and may be used as a vehicle data exchange hub. The OTA main control deployment node may control update of related components (for example, a seat, a tail lamp, and an air conditioner) through the CAN gateway.

In this embodiment of this application, the server may be deployed on an electronic device that has a communication function and a storage function, or may be deployed on a virtual machine on a cloud.

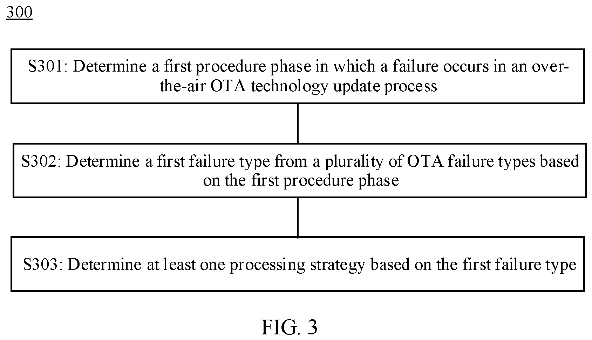

FIG. 3 is a schematic flowchart of a processing method according to an embodiment of this application. An execution body of a method 300 may be a carrier 100. When the execution body of the method 300 is the carrier 100, the method 300 may be performed by a computing platform 130 in the carrier 100, or may be performed by a system-on-chip (system-on-chip, SoC) on the computing platform 130, or may be performed by a processor on the computing platform 130. The following describes the method 300 by using an example in which an execution body is a carrier. The method 300 may include step S301 to step S303.

S301: Determine a first procedure phase in which a failure occurs in an over-the-air OTA technology update process.

Optionally, the first procedure phase may include one or more of an update condition check phase, an OTA mode entering phase, a flushing phase, a software activation phase, an OTA mode exiting phase, and an update completion processing phase.

S302: Determine a first failure type from a plurality of OTA failure types based on the first procedure phase.

Optionally, failure types of a plurality of OTA update failures may be preset. For example, six failure types of failures that may occur in the OTA update process are preset, and an appropriate failure type (the first failure type) is determined from the six failure types based on the first procedure phase, to formulate a corresponding processing strategy.

Optionally, the first failure type may be a first failure level. For example, the OTA update failure may be classified into six levels. The carrier may determine an appropriate failure level (the first failure level) from the six failure levels based on the first procedure phase in which the OTA update failure occurs, to formulate a corresponding processing strategy.

**In** an embodiment, when the first procedure phase includes the flushing phase, in step S302, the carrier may determine the first failure type from the plurality of OTA failure types based on the first procedure phase and a type of a faulty component. In this way, because the type of the faulty component is additionally considered, the determined first failure type is more accurate.

Optionally, the type of the faulty component may include a driving-related component and a non-driving-related component.

Optionally, the type of the faulty component may include a specific type of the component, for example, a VCU or an MCU.

In an embodiment, when the first procedure phase includes the flushing phase, before step S302, the method 300 may further include: obtaining error code, where the error code is determined based on a second procedure phase corresponding to an electronic control unit ECU flushing failure and a cause of the ECU flushing failure. In step S302, the carrier may determine the first failure type from the plurality of OTA failure types based on the first procedure phase, the type of the faulty component, and the error code. In this way, the first failure type can be determined more accurately, and the processing strategy can be formulated more accurately.

Optionally, the second procedure phase corresponding to the ECU flushing failure may include: a pre-programming phase, a main programming phase, a post-programming phase, and the like.

Optionally, based on the foregoing error code, the carrier may determine an error type corresponding to the error code, and formulate a corresponding processing strategy based on the error type.

S303: Determine at least one processing strategy based on the first failure type.

Optionally, the at least one processing strategy may include: prompting a user to reinstall an update package, re-pushing an update task, prompting the user with the carrier's inability to drive, and the like.

In this embodiment of this application, the carrier may determine the first failure type from the plurality of OTA failure types based on a procedure phase of an OTA update failure, and determine the at least one processing strategy based on the first failure type. In this manner, in the OTA update process, a cause of the OTA update failure can be accurately evaluated, and impact of the OTA update failure can be evaluated, to provide a corresponding processing strategy and suggestion.

In an embodiment, after step S303, the method 300 may further include: prompting the user with the failure that occurs in the OTA update process and the at least one processing strategy. In this way, a right of the user to know in the entire OTA update process can be ensured, and anxiety of the user caused by the OTA update failure can be alleviated.

Optionally, a message may be pushed on a display of the carrier to prompt the user with the OTA update failure and the at least one processing strategy.

Optionally, the user may be audibly prompted with the OTA update failure and the at least one processing strategy.

In an embodiment, after step S303, the method 300 may further include: The carrier sends first indication information to the server, where the first indication information indicates the first failure type. In this way, the server can formulate a corresponding processing strategy and suggestion based on the first failure type.

Optionally, the server may include: a server responsible for OTA update and/or a server of an operator. The server may be deployed on an electronic device that has a communication function and a storage function, or may be deployed on a virtual machine on a cloud.

After receiving the first indication information, the server may prompt, based on the first failure type, the user with the failure that occurs in the OTA update process and at least one processing suggestion. In this way, after the OTA update failure occurs, a right of the user to know can be ensured in time, and anxiety of the user caused by the OTA update failure can be alleviated.

For example, after receiving the first indication information, the server may push a message to an application on a mobile phone of the user or send a short message to the mobile phone of the user, to prompt the user with the failure that occurs in the OTA update process and the at least one processing suggestion.

Optionally, the at least one processing suggestion may include: prompting the user with the carrier's inability to drive, performing a telephone follow-up on the user, providing a trailer service, and the like.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

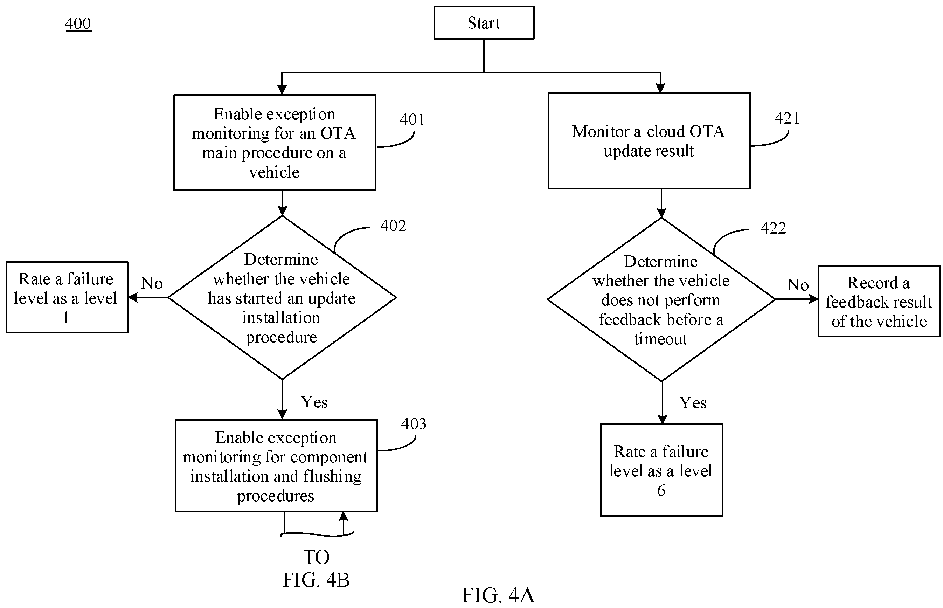

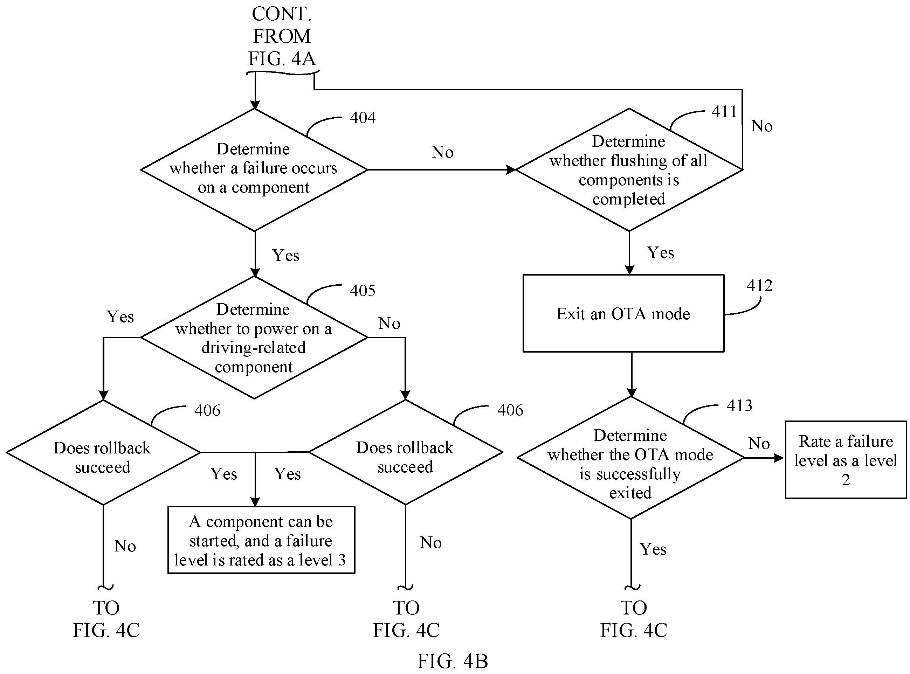

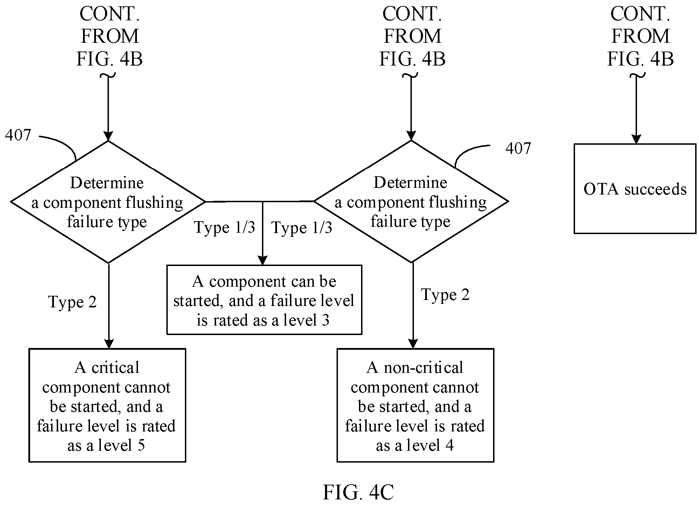

FIG. 4A to FIG. 4C are a schematic flowchart of another processing method according to an embodiment of this application. A method 400 may be a specific description of steps S301 to S303 in the method 300. The following describes the method 400 by using an example in which the carrier is a vehicle. The method 400 may include two parts: vehicle exception monitoring and cloud exception monitoring.

The vehicle exception monitoring may include the following steps.

S401: Enable exception monitoring for an OTA main procedure on a vehicle.

S402: Determine whether the vehicle has started an update installation procedure.

Specifically, if the vehicle determines that the OTA update installation procedure has started, step S403 may be performed; otherwise, this case may be rated as a failure level 1.

For example, a consequence of the failure level 1 may be that the vehicle may continue to use a component of an old version (a version that is not updated) to process a service.

S403: Enable exception monitoring for component installation and flushing procedures.

It should be understood that flushing may include erasing and writing. Erasing may be removing original data in a memory of an ECU chip, and writing may be writing new data into the memory of the ECU chip.

S404: Determine whether a component fails.

Specifically, if the vehicle determines that a component fails, step S405 may be performed; otherwise, step S411 may be performed.

Optionally, whether a component fails may be understood as whether the component fails in an installation process and/or a flushing process.

S405: Determine whether to power on a driving-related component.

It should be understood that power-on may mean that a driving-related component is powered on, or power-on may mean that a high-voltage power battery is used to supply power to the driving-related component.

Optionally, the driving-related component may include at least one of the following: a vehicle control unit (vehicle control unit, VCU), a BMS, a motor control unit (motor control unit, MCU), a gear shift module (gear shift module, GSM), a body control module (body control module, BCM), and an automotive electronic stability controller (electronic stability controller, ESC).

S406: Determine whether rollback succeeds.

Specifically, in step S405, regardless of whether the driving-related component is powered on, if the rollback succeeds, it may be determined that the component can be started. This case is rated as a failure level 3. Otherwise, step S407 is performed.

For example, a consequence of the failure level 3 may be that all components of the vehicle can be normally started, basic functions of the vehicle are normal, and the vehicle can be driven.

It should be understood that the rollback may be a behavior of restoring a program or data to a previous correct state for a processing error of the program or the data. A type of the rollback may include program rollback, data rollback, and the like.

S407: Determine a component flushing failure type.

Specifically, in step S405, regardless of whether the driving-related component is powered on, when it is determined, in step S407, that the component flushing failure type is a type 1 or a type 3, it may be determined that the component can be started. This case is rated as the failure level 3.

In step S405, if it is determined that the driving-related component is not powered on, and it is determined, in step S407, that the component flushing failure type is a type 2, it may be determined that a non-critical component (for example, a non-power-related component) cannot be started. This case is rated as a failure level 4.

In step S405, if it is determined that the driving-related component is powered on, and it is determined, in step S407, that the component flushing failure type is the type 2, it may be determined that a critical component (for example, a power-related component) cannot be started. This case is rated as a failure level 5.

For example, the type 1 may indicate that the component fails before flushing, but the ECU can be started. The type 2 may indicate that the ECU cannot be started. The type 3 may indicate that the component fails after flushing, but the ECU can be started.

For example, a consequence of the failure level 4 may be that the vehicle can be driven normally, but some functions cannot be used.

A consequence of the failure level 5 may be that the vehicle cannot be powered on and cannot be driven.

In step S404, if the vehicle determines that the component is properly functioning, the following steps may be performed.

S411: Determine whether flushing of all components is completed.

Specifically, the vehicle may determine whether the flushing of all the components is completed. If the flushing is completed, step S412 may be performed; otherwise, step S403 may be performed again.

S412: Exit an OTA mode.

S413: Determine whether the OTA mode is successfully exited.

Specifically, if the vehicle determines that the OTA mode is successfully exited, the method 400 ends. Otherwise, this case may be rated as the failure level 3.

The cloud exception monitoring may include the following steps.

S421: Monitor a cloud OTA update result.

S422: Determine whether the vehicle does not perform feedback before a timeout.

Specifically, if the cloud does not detect, within preset duration, feedback information (for example, a progress and a result of the OTA update) of the vehicle in the OTA update process, this case may be rated as a failure level 6. Otherwise, the cloud may record a feedback result of the vehicle.

For example, a consequence of the failure level 6 may be that the vehicle cannot be driven.

Optionally, a cause of the failure level 6 may be that the OTA update cannot be completed because the OTA update causes power feeding.

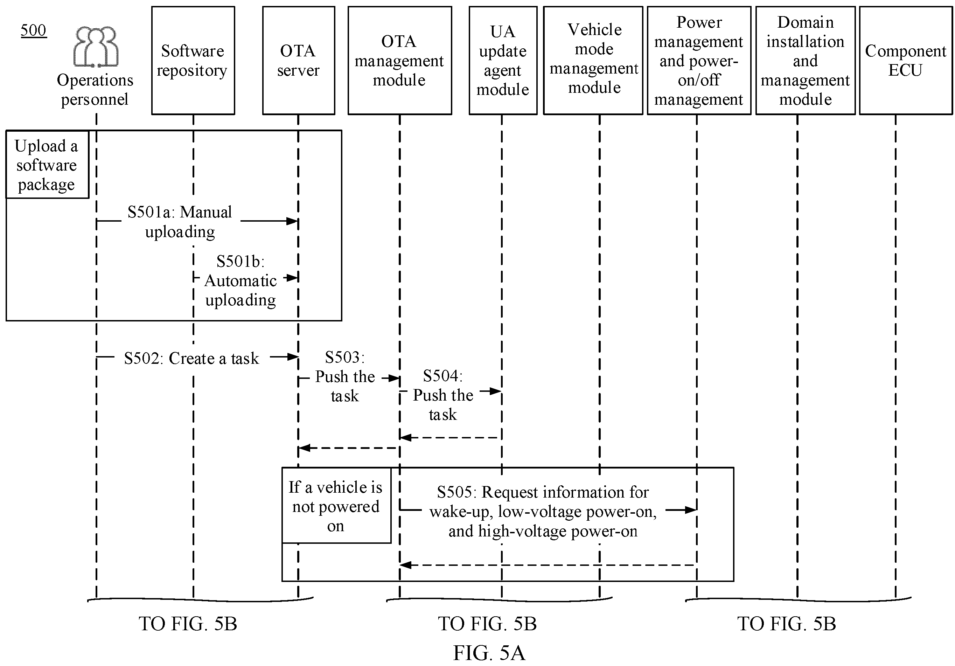

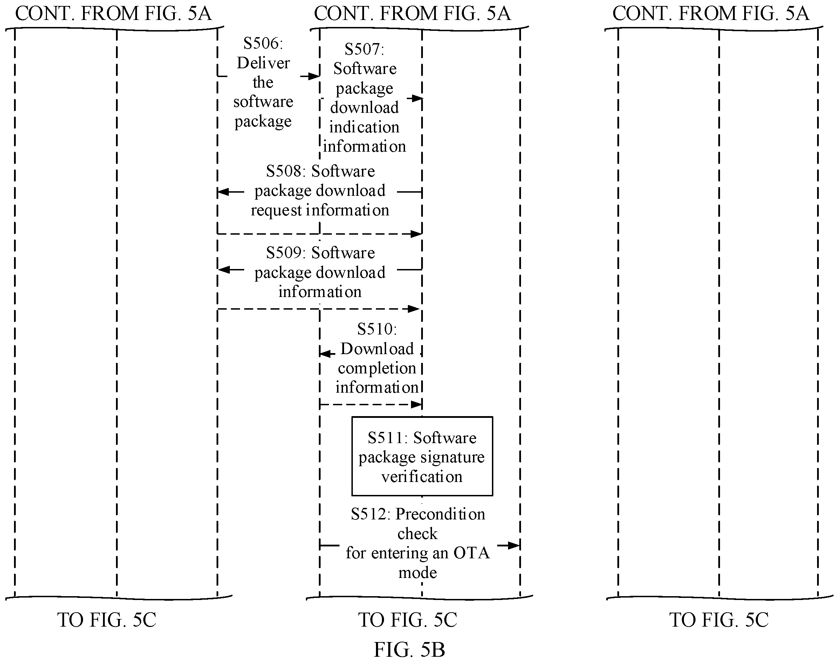

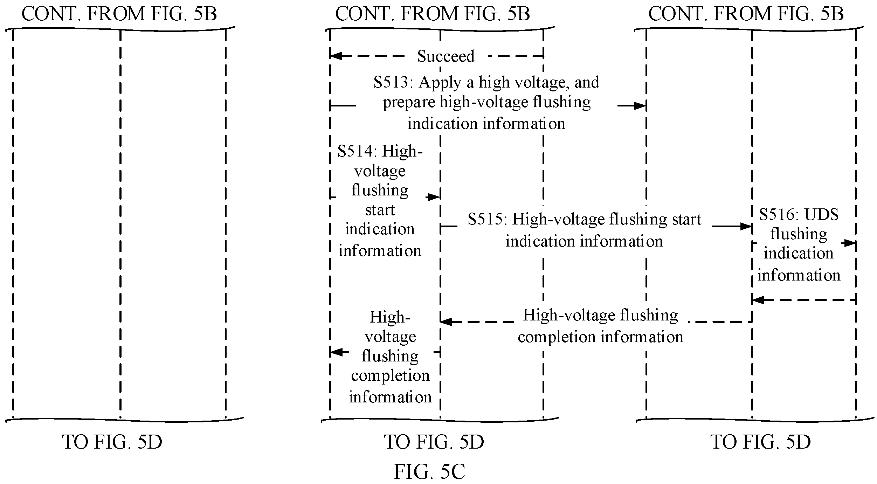

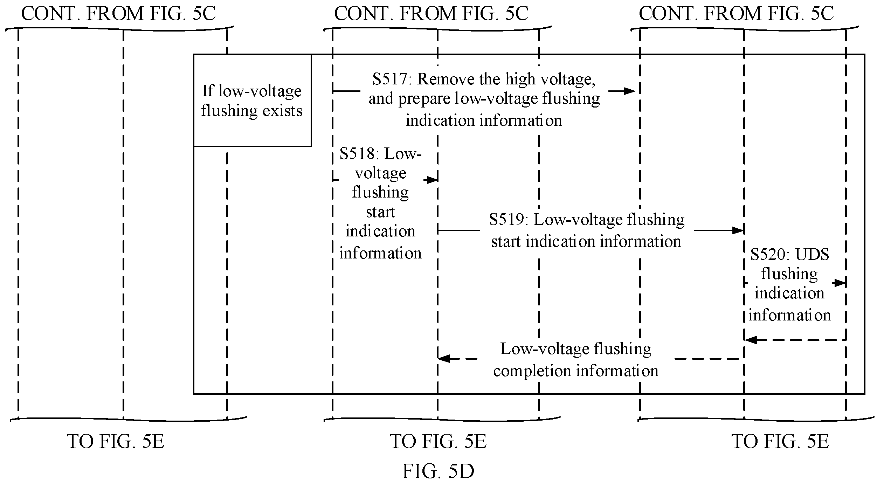

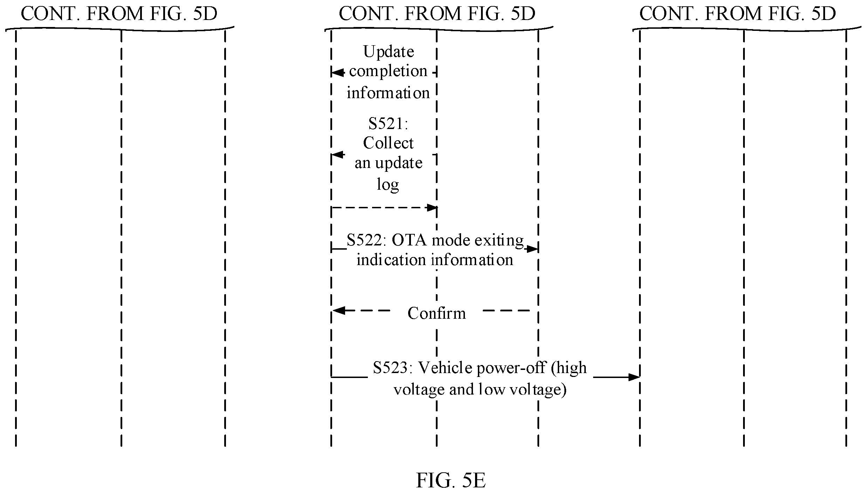

FIG. 5A to FIG. 5E are a schematic flowchart of another processing method according to an embodiment of this application. A method 500 may be a specific description of steps S301 to S303 in the method 300. The following describes the method 500 by using an example in which the carrier is a vehicle. The method 500 may include the following steps.

S501: An OTA server detects that a software package is uploaded.

Specifically, the software package may be manually uploaded by operation personnel, or may be automatically uploaded through a software repository on a cloud.

In step S501, if a failure occurs in the procedure, a user cannot perceive the failure. In other words, the failure of the procedure has no impact on the user.

S502: The OTA server detects that the operation personnel create a task.

For example, the task may be an OTA update task, and the task may include one or more of a task file, a component ID, and a software package.

S503: The OTA server pushes the task to an OTA management module.

S504: The OTA management module pushes the task to a user agent (user agent, UA) update agent module.

In steps S502 to S504, if a failure occurs in the procedure, the user cannot perceive the failure. In other words, the failure of the procedure has no impact on the user.

S505: The OTA management module sends a request message to a power management and power-on/off management module, to request the power management and power-on/off management module to sequentially wake up the vehicle, supply power to a related component by using a low-voltage power battery, and supply power to the related component by using a high-voltage power battery.

In step S505, if a failure occurs in the procedure, the user cannot perceive the failure. In other words, the failure of the procedure has no impact on the user.

Optionally, step S505 may be performed when the vehicle is not powered on. If the vehicle is powered on, step S505 may be skipped, and step S506 is directly performed.

S506: The OTA server delivers the software package to the OTA management module.

S507: The OTA management module sends software package download indication information to the UA update agent module.

S508: The UA update agent module sends software package download request information to the OTA server.

S509: The UA update agent module sends software package download information to the OTA server.

S510: The UA update agent module sends download completion information to the OTA management module.

For example, the download completion information may indicate that the UA update agent module has successfully downloaded the software package.

In steps S506 to S510, if a failure occurs in the procedure, the user does not have an obvious perception of the failure. Subsequently, the failure in the procedure can be solved by resumable transfer or re-downloading the software package.

S511: The UA update agent module performs software package signature verification.

In step S511, if a failure occurs in the procedure, that is, the signature verification of the software package fails, the software package fails to be downloaded, and the vehicle cannot start the OTA update. However, a component of an existing version and related software on the vehicle are available. Therefore, even if a failure occurs in the procedure, normal use of the vehicle by the user is not affected.

S512: A vehicle mode management module performs a precondition check for entering the OTA mode, and if the check succeeds, the vehicle enters the OTA update mode, and step S513 is performed.

In step S512, if a failure occurs in the procedure, the vehicle cannot start the OTA update, but a component of an existing version on the vehicle and related software of the component are available.

S513: The OTA management module indicates the power management and power-on/off management module to apply a high voltage, and prepares high-voltage flushing indication information.

Applying a high voltage may be understood as that a high-voltage power battery is used to supply power to a related component for OTA update.

S514: The OTA management module sends high-voltage flushing start indication information to the UA update agent module.

S515: The UA update agent module sends the high-voltage flushing start indication information to a domain installation and management module.

In step S513 to step S515, if a failure occurs in the procedure, the vehicle cannot start the OTA update, but a component of an existing version on the vehicle and related software of the component are available.

S516: The domain installation and management module sends UDS flushing indication information to a component ECU.

Optionally, after completing UDS flushing, the component ECU may send flushing completion information to the domain installation and management module. After receiving the flushing completion information, the domain installation and management module may send high-voltage flushing completion information to the UA update agent module. After receiving the high-voltage flushing completion information, the UA update agent module may send the high-voltage flushing completion information to the OTA management module.

S517: The OTA management module indicates the power management and power-on/off management module removes the high voltage, and prepares low-voltage flushing indication information.

Removing the high voltage may be understood as that a low-voltage power battery is used to supply power to a related component in the OTA update process.

S518: The OTA management module sends low-voltage flushing start indication information to the UA update agent module.

S519: The UA update agent module sends the low-voltage flushing start indication information to the domain installation and management module.

In step S516 to step S519, if a failure occurs in the procedure, it may be determined that versions of components do not match, but basic functions of the vehicle are available (for example, a dashboard display function of the vehicle is normal, and the vehicle can be driven normally). That versions of components do not match may be understood as that a part of components in the vehicle complete OTA update, and the other part of components do not complete OTA update. The two parts of components cannot cooperate with each other.

S520: An installation program module sends UDS flushing indication information to the component ECU.

Optionally, after completing UDS flushing, the component ECU may send flushing completion information to the domain installation and management module. After receiving the flushing completion information, the domain installation and management module may send low-voltage flushing completion information to the UA update agent module. After receiving the low-voltage flushing completion information, the UA update agent module may send update flushing completion information to the OTA management module.

In step S520, if a failure occurs in the procedure, the vehicle may determine impact of the failure based on a component on which a failure occurs and a phase in which a failure occurs. The impact of the failure may include at least one of the following: versions of components do not match, some functions of a component fail but driving is not affected, a component cannot be powered on, and the vehicle cannot be driven.

Optionally, step S520 may be performed when the vehicle needs to perform low-voltage flushing. If the vehicle does not need to perform low-voltage flushing, step S520 may be skipped, and step S521 is directly performed.

S521: The UA update agent module collects an update log from the OTA management module.

S522: The OTA management module sends OTA mode exiting indication information to the vehicle mode management module.

S523: The power management and power-on/off management module performs vehicle power-off, and exits the OTA mode.

In this embodiment of this application, in the OTA update process, impact on the user after a failure occurs in each step or procedure phase of the OTA update may be analyzed, to help formulate the processing strategy for the OTA update failure.

The following uses Table 1 as an example to describe an analysis result and a processing strategy of an exception that occurs in a function of a component of a vehicle in an OTA update process.

**Table 1**

| Component type | Can high voltage be applied | Whether a vehicle can be driven | Whether to turn on a fault indicator or sign | Other malfunctions |
|---|---|---|---|---|
| VCU | No | No | Yes | None |
| BMS | No | No | Yes | None |
| MCU | No | No | Yes | Either a front motor control unit (motor control unit front, MCUF) or a rear motor control unit (motor control unit rear, MCUR) is damaged, but the MCU can still work |
| GSM | Yes | No | Yes | Unable to switch a gear |
| ESC | Yes | No | Yes | Unable to release electrical parking brake (electrical parking brake, EPB), and unable to switch a gear |
| BCM | No | No | Yes | Unable to apply a low voltage, and only a machine key can be used to open a door |
| GTW | Yes | No | No | A gateway function is invalid and a high voltage can be applied, but an anti-theft authentication fails and a gear cannot be engaged |
| AC | Yes | Yes | No | An air conditioner cannot be used |
| DSM | Yes | Yes | No | Massage, heating, and ventilation functions fail |
| ALC | Yes | Yes | No | An atmosphere indicator controller fails |

As shown in Table 1, for example, if it is detected that a function of the VCU component is abnormal in the OTA update process, a consequence is that the vehicle cannot be powered by the high-voltage power battery, and the vehicle cannot continue to be driven. Because the VCU is a driving-related component, a strategy used after the function of the VCU is abnormal may be that the vehicle gives a prompt to the user by turning on a fault indicator or in another manner. For another example, if it is detected that a function of the air conditioner (air conditioner, AC) component is abnormal in the OTA update process, the vehicle can be powered by the high-voltage power battery and the vehicle can continue to be driven, but the air conditioner cannot be used. Because the AC is a non-driving-related component, a strategy used after the function of the AC is abnormal may be that the vehicle does not give a prompt to the user. For another example, if it is detected that a function of the GSM component is abnormal in the OTA update process, a consequence is that the vehicle can be powered by the high-voltage power battery, but the vehicle cannot continue to be driven and gears cannot be switched. Because the GSM is a driving-related component, a strategy used after the function of the GSM is abnormal may be that the vehicle gives a prompt to the user by turning on a fault indicator or in another manner.

In this embodiment of this application, in the OTA update process, an abnormal component may be analyzed to obtain an analysis result and a corresponding processing strategy, and the analysis result and the corresponding processing manner are summarized into a table, so that table lookup processing is performed when a component is abnormal.

The following uses Table 2 as an example to describe a processing strategy when an error occurs in a flushing phase of OTA update.

**Table 2**

| Error code | Error description | Error type |
|---|---|---|
| 00010020 | Secure access service fails | Type 1 |
| 00010022 | Preprogramming precondition check fails | Type 1 |
| 00020001 | Programming session request response times out | Type 1 |
| 00020016 | File block erasing times out | Type 2 |
| 00020023 | Data transmission response times out | Type 2 |
| 00030007 | Versions after update do not match | Type 3 |
| 00030015 | OTA mode fails to exit | Type 3 |

If a failure occurs in the flushing phase of the OTA update, the vehicle may obtain error code. The error code may be determined based on the procedure phase corresponding to the ECU flushing failure and a cause of the ECU flushing failure. An error type may be determined based on the error code, and a failure level of the corresponding OTA update failure and a corresponding processing strategy are further determined. The error type may include a type 1 to a type 3. The type 1 may indicate that the component fails before flushing, but the ECU can be started. The type 2 may indicate that the ECU cannot be started. The type 3 may indicate that the component fails after flushing, but the ECU can be started.

For example, as shown in Table 2, the vehicle receives the error code 00020001 when performing the OTA update. The error code means that a programming session request response times out. The vehicle may determine, based on the error code, that the error type is the type 1. In other words, a failure occurs before flushing but the ECU can be started. In this case, the vehicle may determine the corresponding failure level based on the error type (the type 1) and the type of the faulty component in the flushing process, and determine the processing strategy corresponding to the failure level.

For another example, as shown in Table 2, the vehicle receives the error code 00030015 when performing the OTA update. The error code means that the vehicle fails to exit the OTA mode. The vehicle may determine, based on the error code, that the error type is the type 3. In other words, the component fails after the flushing, but the ECU can be started. In this case, the vehicle may determine the corresponding failure level based on the error type (the type 3) and the type of the faulty component in the flushing process, and determine the processing strategy corresponding to the failure level.

In this embodiment of this application, if an error occurs in the flushing procedure of the OTA update, the vehicle may obtain the error code, determine the error type based on the error code, and further determine the corresponding failure level of the OTA update failure and the corresponding processing strategy.

The following uses Table 3 as an example to describe a corresponding processing strategy after the failure level is determined in the OTA update process.

**Table 3**

| Failure level | Failure category | Vehicle processing strategy | Cloud processing strategy | Processing strategy suggestion for operation personnel |
|---|---|---|---|---|
| Level 1 | 1. A precondition check is not passed, and a formal flushing procedure is not started | 1. Large-screen HMI notification | 1. Push information/SMS notification to an APP on a mobile phone | No need for proactive service |
| | | 2. User can reinstall an update package | | |
| | | | 2. Accurately identify a failure cause and a service strategy, and notify a service operation system | |
| | 2. Update succeeds, but an OTA fails to be exited | 1. Large-screen HMI notification, and the HMI notification can be automatically cleared when a vehicle is powered on next time | | |
| | | | 3. For a failure level 6, add timeout | |
| | | 2. No action is required | | |
| Level 2 | Update fails, but vehicle rollback succeeds | 1. Large-screen HMI notification | judgment to a cloud | Perform a telephone follow-up on a user and guide the user to reinstall an update package. |
| | | 2. A background pushes an update task again and waits for a user to download and install an update package again | | |
| Level 3 | Update fails, and rollback fails, but all components can be started normally | 1. Large-screen HMI notification | | Perform a telephone follow-up on a user and guide the user to go to a 4S shop for service update |
| | | 2. An existing troubleshooting strategy is reused, and a vehicle can be driven | | |
| Level 4 | Non-power-related components are damaged and cannot be started | 1. Large-screen HMI notification | | Perform a telephone follow-up on a user and guide the user to go to a 4S shop for service update |
| | | 2. If one of MCUF/MCUR components is damaged, a vehicle can be driven; or if both of MCUF/MCUR components are damaged, a vehicle cannot be driven | | |
| | | 3. If another component is damaged, an existing troubleshooting strategy is reused, and a vehicle can be driven | | |
| Level 5 | Power-related components are damaged and cannot be started | 1. Large-screen HMI notification | | Perform a telephone follow-up, provide a proactive door-to-door service, and/or provide a trailer service |
| | | 2. If VCU/BMS/MCU/BCM/ GSM/ESC/GW is damaged, an existing troubleshooting strategy is reused, and a vehicle cannot be driven | | |
| Level 6 | Update is suspended and cannot exit, resulting in feeding, and the update is not completed | 1. No result, and notification cannot be made | | Perform a telephone follow-up, provide a proactive door-to-door service, and/or provide a trailer service |
| | | 2. Reuse an existing feeding troubleshooting strategy | | |

After determining the failure level, the vehicle may use a corresponding processing strategy based on the failure level. In addition, the vehicle may notify a server (including a cloud server and an operator server) of the failure level through signaling interaction, and the server may use the corresponding processing strategy based on the failure level.

For example, as shown in Table 3, when the vehicle determines that the failure level in the OTA process is the level 1, the vehicle may prompt, through the large-screen HMI, the user with the OTA update failure because a pre-check phase of a software package fails and a vehicle does not start a formal flushing process. In addition, the vehicle may prompt the user to reinstall the software package. When learning that the failure level of the vehicle is the level 1, the cloud server may push a message to an application (application, APP) of a mobile phone of the user, to notify the user of the OTA update failure of the vehicle, and provide a corresponding processing suggestion.

For another example, as shown in Table 3, when the vehicle determines that the failure level in the OTA process is the level 2, the vehicle may inform, through the large-screen HMI, the user that the OTA update fails but rollback succeeds. In addition, the vehicle may inform the user that the vehicle is to push an update task again in a background, and wait for the user to download and install an update package again. When learning that the failure level of the vehicle is the level 2, the cloud server may send an SMS message to a mobile phone of the user to notify the user of the OTA update failure of the vehicle, and provide a corresponding processing suggestion. When learning that the failure level of the vehicle is the level 2, the operator server may arrange corresponding operation personnel to perform a telephone follow-up on the user, to guide the user to reinstall an update package.

For another example, as shown in Table 3, when the vehicle determines that the failure level in the OTA process is the level 6, a cause may be as follows: An OTA update program cannot be exited, resulting in vehicle feeding, and update cannot be completed. In this case, the vehicle cannot prompt the user through the large-screen HMI. However, the vehicle may perform processing based on an existing feeding processing strategy. If the cloud server does not detect, within preset duration, feedback of the vehicle in the OTA update process, the cloud server may notify the user of this case through an APP of a mobile phone or an SMS message, and notify an operator of the case. After learning the case, the operator can arrange operation personnel to perform a telephone follow-up on the user and provide a door-to-door service or a trailer service.

In this embodiment of this application, after determining the failure level of the vehicle in the OTA update process, the vehicle, the cloud server, and the operator may take corresponding measures to prompt the user with the OTA update failure, and provide corresponding processing suggestions. In this manner, a right to know of the user in a process of the OTA update failure can be ensured in time, and a problem existing in the process of the OTA update failure can be effectively resolved.

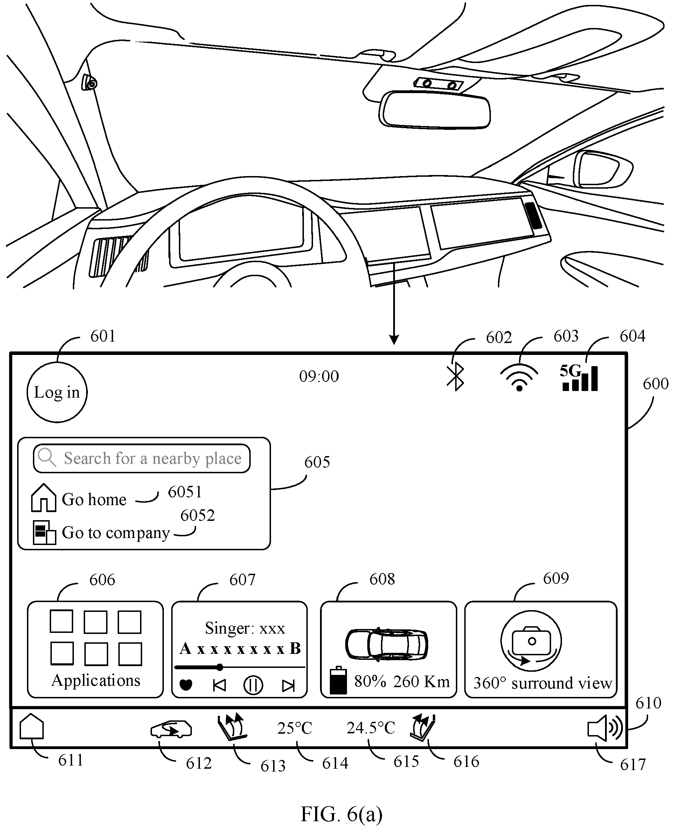

FIG. 6(a) to FIG. 6(e) are diagrams of a scenario to which a processing method according to an embodiment of this application is applicable. The method 300, the method 400, and the method 500 are applicable to this scenario.

As shown in FIG. 6(a), an interface 600 and a function bar 610 are displayed on a central control large screen of a vehicle. The interface 600 includes user account login information 601 (an account has not logged in to the current vehicle), a Bluetooth function icon 602, a Wi-Fi function icon 603, a cellular network signal icon 604, a vehicle-mounted map application search box 605, a widget 606 for switching to display all applications installed on the vehicle, a widget 607 for switching to display a vehicle-mounted music application, a display widget 608 of a remaining power and a remaining traveling mileage of the vehicle, and a display card 609 of a 360-degree (°) surround view function of the vehicle. The vehicle-mounted map application search box 605 may include a "go home" control 6051 and a "go to company" control 6052 that are set by a user. The function bar 610 includes an icon 611 for switching to display a desktop of the central control large screen, a vehicle internal circulation icon 612, a driver seat heating function icon 613, a driver seat area air conditioner temperature display icon 614, a front passenger seat area air conditioner temperature display icon 615, a front passenger seat heating function icon 616, and a volume setting icon 617.

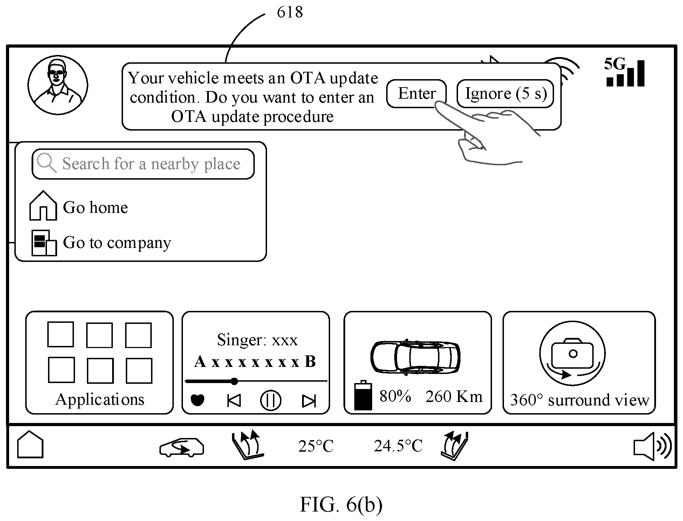

FIG. 6(b) shows a graphical user interface (graphical user interface, GUI). The GUI includes a prompt box 618, indicating, to the user, that the vehicle meets an OTA update condition and whether to enter an OTA update procedure. When the vehicle detects that a driver taps an entry control in the prompt box 618, the vehicle may perform OTA update. In the OTA update process, if the vehicle obtains error code, the vehicle may determine a current failure level based on the error code, a type of a faulty component, and a procedure phase of an OTA update failure, and give a prompt to the user based on the failure level.

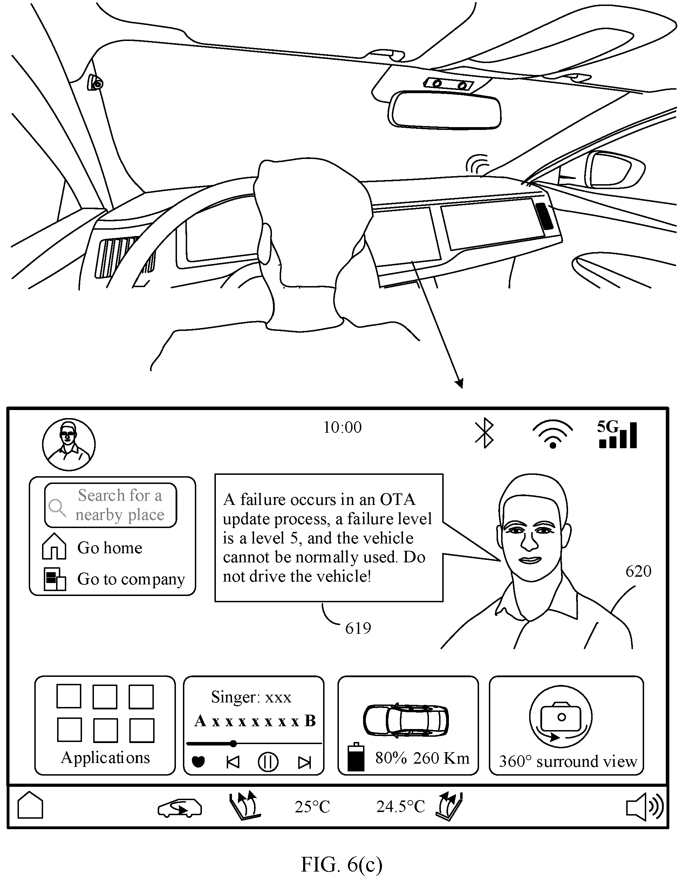

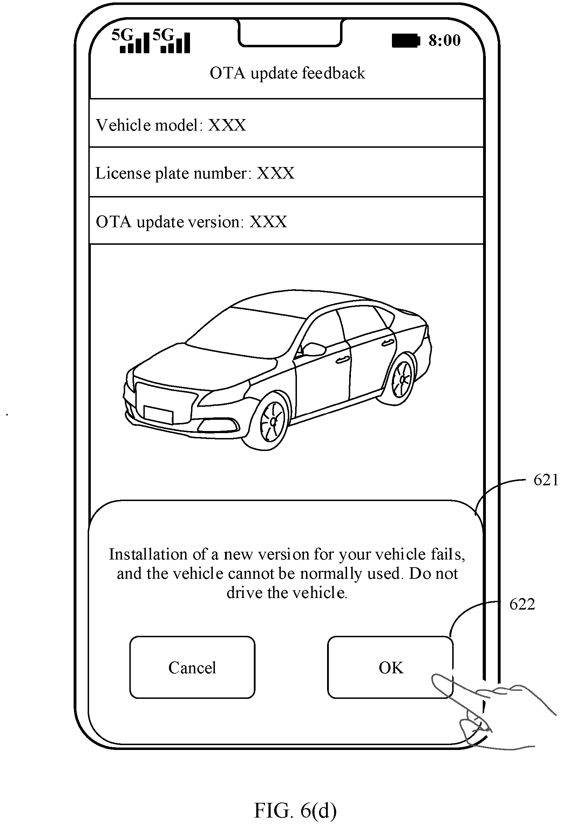

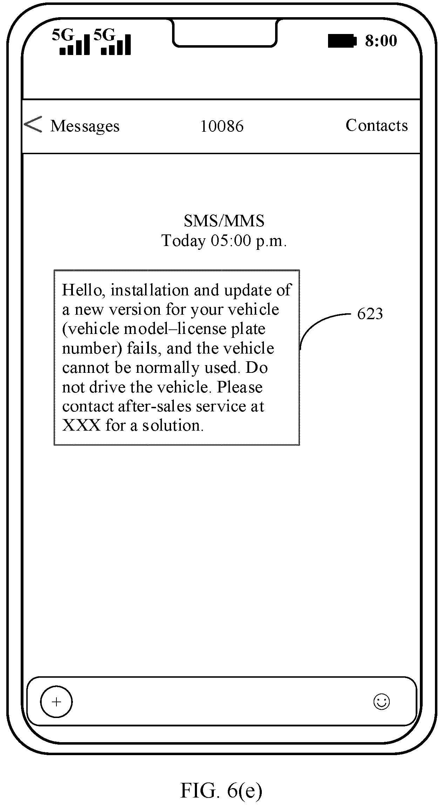

For example, the vehicle determines that the current OTA failure level is the level 5, and a GUI shown in FIG. 6(c) may be displayed on the central control large screen of the vehicle. The GUI includes a prompt text 619 and a voice assistant 620. The voice assistant 620 may indicate, to the user in a form of a voice and a text, that "A failure occurs in an OTA update process, a failure level is a level 5, and the vehicle cannot be normally used. Do not drive the vehicle". In addition, after determining that the failure level is the level 5, the vehicle may send information to a server, to notify the server that the current OTA failure level of the vehicle is the level 5, and the server may push prompt information to a mobile phone of the user based on the failure level. In an embodiment, the server may push the prompt information to an APP on the mobile phone of the user, for example, as shown in a GUI in FIG. 6(d). The GUI is a display interface of the mobile phone of the user, and the display interface includes a prompt box 621 and a control 622. A model of the vehicle that currently performs the OTA update, a license plate number, and an OTA update version may be further displayed on the GUI. After receiving OTA update failure indication information from the server, the mobile phone may indicate, to the user through the prompt box 621, that "Installation of a new version for your vehicle fails, and the vehicle cannot be normally used. Do not drive the vehicle". In another embodiment, the server may send an SMS message to the mobile phone of the user for prompting, for example, as shown in a GUI in FIG. 6(e). The GUI is a display interface of the mobile phone of the user, and the display interface includes a prompt box 623. After receiving the SMS message sent by the server, the mobile phone may display content of the SMS message in the prompt box 623: "Installation and update of a new version (version number) for your vehicle (vehicle model-license plate number) fails, and the vehicle cannot be normally used. Do not drive the vehicle. Please contact after-sales service at XXX (after-sales service phone number) for a solution". In addition to the foregoing two implementations, operation personnel of an operator may contact the user to provide a door-to-door service or a trailer service.

In this embodiment of this application, after determining the failure level of the OTA update failure of the vehicle, the vehicle, the cloud, and the operator may take corresponding measures to prompt the user with the OTA update failure, and may provide corresponding processing suggestions. In this manner, a right to know of the user in a process of the OTA update failure can be ensured in time, and a problem existing in the process of the OTA update failure can be effectively resolved.

It should be understood that the application scenarios shown in FIG. 6(a) to FIG. 6(d) are merely examples for description, and should not be construed as a limitation on this application. Content prompted by the vehicle and the mobile phone to the user may be determined based on an actual application status of the processing method.

It should be further understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

An embodiment of this application further provides an apparatus configured to implement any one of the foregoing methods. The apparatus includes units configured to implement steps performed by the carrier 100 in any one of the foregoing methods.

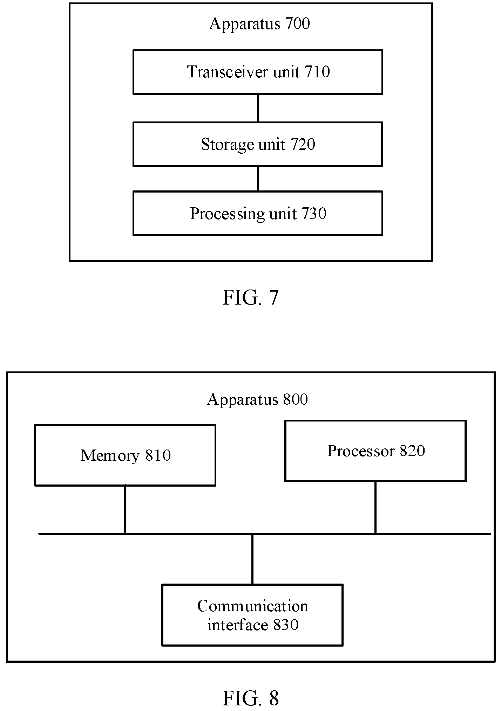

FIG. 7 is a diagram of a processing apparatus 700 according to an embodiment of this application. The apparatus 700 may include a transceiver unit 710, a storage unit 720, and a processing unit 730. The transceiver unit 710 is configured to receive and send instructions and/or data, and the transceiver unit 710 may also be referred to as a communication interface or a communication unit. The storage unit 720 is configured to implement a corresponding storage function, and store corresponding instructions and/or data. The processing unit 730 is configured to perform data processing. The processing unit 730 may read instructions and/or data in the storage unit, so that the apparatus 700 implements the foregoing processing method.

In a design, the apparatus 700 may be configured to perform actions performed by the carrier in the foregoing embodiments.

The apparatus 700 may include a processing unit 730. The processing unit 730 is configured to: determine a first procedure phase in which a failure occurs in an over-the-air OTA technology update process; determine a first failure type from a plurality of OTA failure types based on the first procedure phase; and determine at least one processing strategy based on the first failure type.

In a possible implementation, the processing unit 730 is further configured to prompt a user with the failure that occurs in the OTA update process and the at least one processing strategy.

In a possible implementation, the apparatus 700 further includes the transceiver unit 710. The transceiver unit 710 is configured to send first indication information to a server, where the first indication information indicates the first failure type.

In a possible implementation, the first procedure phase includes one or more of an update condition check phase, an OTAmode entering phase, a flushing phase, a software activation phase, an OTA mode exiting phase, and an update completion processing phase.

In a possible implementation, the first procedure phase includes the flushing phase. The processing unit 730 is specifically configured to determine the first failure type from the plurality of OTA failure types based on the first procedure phase and a type of a faulty component.

In a possible implementation, the processing unit 730 is further configured to obtain error code, where the error code is determined based on a second procedure phase corresponding to an electronic control unit ECU flushing failure and a cause of the ECU flushing failure; and the processing unit 730 is specifically configured to determine the first failure type from the plurality of OTA failure types based on the first procedure phase, the type of the faulty component, and the error code.

In a design, the apparatus 700 may be configured to perform actions performed by the server in the foregoing embodiments.

The apparatus 700 includes a transceiver unit 710 and a processing unit 730. The transceiver unit 710 is configured to receive first indication information sent by a carrier, where the first indication information indicates a first failure type, and the first failure type corresponds to a first procedure phase in which a failure occurs in an OTA update process of the carrier; and the processing unit 730 is configured to prompt, based on the first failure type, a user with the failure that occurs in the OTA update process and at least one processing suggestion.

In a possible implementation, the first procedure phase includes one or more of an update condition check phase, an OTAmode entering phase, a flushing phase, a software activation phase, an OTA mode exiting phase, and an update completion processing phase.

Optionally, if the apparatus 700 is located in the carrier 100, the processing unit 730 may be the processor 131 shown in FIG. 1.

FIG. 8 is a diagram of another processing apparatus 800 according to an embodiment of this application. The apparatus 800 may be applied to the carrier 100 in FIG. 1.

The apparatus 800 includes a memory 810, a processor 820, and a communication interface 830. The memory 810, the processor 820, and the communication interface 830 are connected through an internal connection path. The memory 810 is configured to store instructions. The processor 820 is configured to execute the instructions stored in the memory 810, to control the communication interface 830 to obtain information, or enable the apparatus 800 to implement the foregoing processing method. Optionally, the memory 810 may be coupled to the processor 820 through an interface, or may be integrated with the processor 820.

It should be noted that the communication interface 830 uses a transceiver apparatus, for example, but not limited to, a transceiver. The communication interface 830 may further include an input/output interface (input/output interface).

The processor 820 stores one or more computer programs, and the one or more computer programs include instructions. When the instructions are run by the processor 820, the processing apparatus 800 is enabled to perform the processing method in the foregoing embodiments.

In an implementation process, the steps of the foregoing method may be performed by using an integrated logic circuit of hardware in the processor 820 or instructions in a form of software. The method disclosed with reference to embodiments of this application may be directly performed by a hardware processor, or may be performed through a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory 810. The processor 820 reads information from the memory 810, and performs the steps of the foregoing method in combination with the hardware of the processor. To avoid repetition, details are not described herein again.

Optionally, the communication interface 830 in FIG. 8 may implement the transceiver unit 710 in FIG. 7, the memory 810 in FIG. 8 may implement the storage unit 720 in FIG. 7, and the processor 820 in FIG. 8 may implement the processing unit 730 in FIG. 7.

Optionally, the apparatus 700 or the apparatus 800 may be a computing platform, and the computing platform may be a vehicle-mounted computing platform or a cloud computing platform.

Optionally, the apparatus 700 or the apparatus 800 may be located in the carrier 100 in FIG. 1.

Optionally, the apparatus 700 or the apparatus 800 may be the computing platform 130 in the carrier in FIG. 1.

An embodiment of this application further provides a computer-readable storage medium, where the computer-readable storage medium stores program code, and when the computer program code is run on a computer, the computer is enabled to perform any one of the methods in FIG. 3 to FIG. 5A to FIG. 5E.

An embodiment of this application further provides a computer program product, where the computer product includes a computer program, and when the computer program is run, a computer is enabled to perform any one of the methods in FIG. 3 to FIG. 5A to FIG. 5E.

An embodiment of this application further provides a chip, including a circuit, where the circuit is configured to perform any one of the methods in FIG. 3 to FIG. 5A to FIG. 5E.

An embodiment of this application further provides a carrier, including any processing apparatus in FIG. 7 or FIG. 8.

An embodiment of this application further provides a server, including any processing apparatus in FIG. 7 or FIG. 8.

An embodiment of this application further provides a processing system, including the carrier and the server.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A processing method, wherein the method comprises:
determining a first procedure phase in which a failure occurs in an over-the-air OTA technology update process;
determining a first failure type from a plurality of OTA failure types based on the first procedure phase; and
determining at least one processing strategy based on the first failure type.

2. The method according to claim 1, wherein the method further comprises:
prompting a user with the failure that occurs in the OTA update process and the at least one processing strategy.

3. The method according to claim 1 or 2, wherein the method further comprises:
sending first indication information to a server, wherein the first indication information indicates the first failure type.

4. The method according to any one of claims 1 to 3, wherein the first procedure phase comprises one or more of an update condition check phase, an OTA mode entering phase, a flushing phase, a software activation phase, an OTA mode exiting phase, and an update completion processing phase.

5. The method according to claim 4, wherein the first procedure phase comprises the flushing phase, and the determining a first failure type from a plurality of OTA failure types based on the first procedure phase comprises:
determining the first failure type from the plurality of OTA failure types based on the first procedure phase and a type of a faulty component.

6. The method according to claim 5, wherein the method further comprises:
obtaining error code, wherein the error code is determined based on a second procedure phase corresponding to an electronic control unit ECU flushing failure and a cause of the ECU flushing failure; and
the determining a first failure type from a plurality of OTA failure types based on the first procedure phase comprises:
determining the first failure type from the plurality of OTA failure types based on the first procedure phase, the type of the faulty component, and the error code.

7. A processing method, wherein the method comprises:
receiving first indication information sent by a carrier, wherein the first indication information indicates a first failure type, and the first failure type corresponds to a first procedure phase in which a failure occurs in an OTA update process of the carrier; and
prompting, based on the first failure type, a user with the failure that occurs in the OTA update process and at least one processing suggestion.

8. The method according to claim 7, wherein the first procedure phase comprises one or more of an update condition check phase, an OTA mode entering phase, a flushing phase, a software activation phase, an OTA mode exiting phase, and an update completion processing phase.

9. A processing apparatus, wherein the apparatus comprises a processing unit, wherein
the processing unit is configured to:
determine a first procedure phase in which a failure occurs in an over-the-air OTA technology update process;
determine a first failure type from a plurality of OTA failure types based on the first procedure phase; and
determine at least one processing strategy based on the first failure type.

10. The apparatus according to claim 9, wherein
the processing unit is configured to prompt a user with the failure that occurs in the OTA update process and the at least one processing strategy.

11. The apparatus according to claim 9 or 10, wherein the apparatus further comprises a transceiver unit, wherein
the transceiver unit is configured to send first indication information to a server, wherein the first indication information indicates the first failure type.

12. The apparatus according to any one of claims 9 to 11, wherein the first procedure phase comprises one or more of an update condition check phase, an OTA mode entering phase, a flushing phase, a software activation phase, an OTA mode exiting phase, and an update completion processing phase.

13. The apparatus according to claim 12, wherein the first procedure phase comprises the flushing phase; and
the processing unit is specifically configured to determine the first failure type from the plurality of OTA failure types based on the first procedure phase and a type of a faulty component.

14. The apparatus according to claim 13, wherein
the processing unit is further configured to obtain error code, wherein the error code is determined based on a second procedure phase corresponding to an electronic control unit ECU flushing failure and a cause of the ECU flushing failure; and
the processing unit is specifically configured to determine the first failure type from the plurality of OTA failure types based on the first procedure phase, the type of the faulty component, and the error code.

15. A processing apparatus, wherein the apparatus comprises a transceiver unit and a processing unit, wherein
the transceiver unit is configured to receive first indication information sent by a carrier, wherein the first indication information indicates a first failure type, and the first failure type corresponds to a first procedure phase in which a failure occurs in an OTA update process of the carrier; and
the processing unit is configured to prompt, based on the first failure type, a user with the failure that occurs in the OTA update process and at least one processing suggestion.

16. The apparatus according to claim 15, wherein the first procedure phase comprises one or more of an update condition check phase, an OTA mode entering phase, a flushing phase, a software activation phase, an OTAmode exiting phase, and an update completion processing phase.

17. A processing apparatus, comprising a processor and a memory, wherein the processor is coupled to the memory, and is configured to read and execute instructions in the memory, to perform the method according to any one of claims 1 to 8.

18. A computer-readable storage medium, wherein the computer-readable storage medium stores program code, and when the computer program code is run on a computer, the computer is enabled to perform the method according to any one of claims 1 to 8.

19. A chip, comprising a circuit, wherein the circuit is configured to perform the method according to any one of claims 1 to 8.

20. A carrier, comprising the processing apparatus according to any one of claims 9 to 14.

21. A server, comprising the processing apparatus according to claim 15 or 16.

22. A processing system, comprising the carrier according to claim 20 and the server according to claim 21.
